(19) Europäisches Patentamt / European Patent Office / Office européen des brevets

(11) **EP 1 999 571 B1**

(12) **EUROPÄISCHE PATENTSCHRIFT**

(45) Veröffentlichungstag und Bekanntmachung des Hinweises auf die Patenterteilung:
**15.12.2010 Patentblatt 2010/50**

(21) Anmeldenummer: **07727183.1**

(22) Anmeldetag: **21.03.2007**

(51) Int Cl.:
*G06F 7/72* *(2006.01)*

(86) Internationale Anmeldenummer:
**PCT/EP2007/052707**

(87) Internationale Veröffentlichungsnummer:
**WO 2007/107592 (27.09.2007 Gazette 2007/39)**

(54) **VERFAHREN UND VORRICHTUNG ZUR REDUKTION EINES POLYNOMS IN EINEM BINÄREN FINITEN FELD, INSBESONDERE IM RAHMEN EINER KRYPTOGRAPHISCHEN ANWENDUNG**

METHOD AND DEVICE FOR REDUCING A POLYNOMIAL IN A BINARY FINITE FIELD, IN PARTICULAR FOR A CRYPTOGRAPHIC APPLICATION

PROCÉDÉ ET DISPOSITIF DE RÉDUCTION D'UN POLYNÔME DANS UN CHAMP FINI BINAIRE, EN PARTICULIER DANS LE CADRE D'UNE APPLICATION CRYPTOGRAPHIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **22.03.2006 DE 102006013989**

(43) Veröffentlichungstag der Anmeldung:
**10.12.2008 Patentblatt 2008/50**

(73) Patentinhaber: **IHP GmbH-Innovations for High Performance**
**Microelectronics / Leibniz-Institut für innovative Mikroelektronik**
**15236 Frankfurt / Oder (DE)**

(72) Erfinder:
• **LANGENDÖRFER, Peter**
**15230 Frankfurt (Oder) (DE)**
• **PETER, Steffen**
**15234 Frankfurt (Oder) (DE)**

(74) Vertreter: **Eisenführ, Speiser & Partner**
**Anna-Louisa-Karsch-Strasse 2**
**10178 Berlin (DE)**

(56) Entgegenhaltungen:
**US-A1- 2003 208 515     US-A1- 2003 208 518**

• **RODRIGUEZ-HENRIQUEZ F ET AL: "A fast parallel implementation of elliptic curve point multiplication over GF(2<m>)" MICROPROCESSORS AND MICROSYSTEMS, IPC BUSINESS PRESS LTD. LONDON, GB, Bd. 28, Nr. 5-6, 2. August 2004 (2004-08-02), Seiten 329-339, XP004511936 ISSN: 0141-9331**
• **N.A.SAQIB, F.RODRIGUES-HENRIQUEZ, A.DIAZ-PEREZ: "A Parallel Architecture for Fast Computation of Elliptic Curve Scalar Multiplication over GF(2m)" PROCEEDINGS OF TEH 18TH INTERNATIONAL PARALLEL AND DISTRIBUTED PROCESSING SYMPOSIUM IPDPS'04, 2004, Seiten 1-8, XP009093090 in der Anmeldung erwähnt**

**EP 1 999 571 B1**

**Beschreibung**

Die Erfindung betrifft ein Verfahren und eine Vorrichtung zur Reduktion eines einem Polynom C(x) entsprechenden binären ersten Datenworts mit einer Länge von maximal 2n-1 auf ein zweites Datenwort mit einer Länge von maximal m, das in einem binären finiten Feld, dessen Elemente eine maximale Länge m haben, einem zu C(x) äquivalenten Polynom C"0(x) entspricht, wobei m entweder kleiner oder gleich n ist. Weiterhin betrifft die Erfindung ein Kryptographieverfahren und eine Kryptographievorrichtung

Kryptographische Verfahren dienen dem Schutz von Daten vor unberechtigtem Zugriff. Kryptographische Verfahren transformieren die zu schützenden Daten, insbesondere unter Einbeziehung geheimer <u>Schlüssel,</u> in verschlüsselte Daten. Kryptographische Verfahren dienen auch der Entschlüsselung der verschlüsselten Daten unter Einbeziehung des geheimen Schlüssels zur Wiederherstellung der zu schützenden Daten.

Asymmetrische Verschlüsselungsverfahren wie RSA und die elliptische Kurvenkryptographie (Eliptic Curve Cryptography, ECC) werden verwendet, um einen sicheren Austausch von Schlüsseln für kryptographische Verfahren zu gewährleisten und um digitale Signaturen zu berechnen.

Die elliptische Kurvenkryptographie erfordert eine deutlich kürzere Schlüssellänge als RSA bei gleicher Sicherheitsstufe. Darüber hinaus kann man für die elliptische Kurvenkryptographie binäre endliche (finite) Galois-Felder $GF(2^m)$ nutzen, welche auf Grund ihrer algebraischen Eigenschaften sehr gut für Hardwareimplementierungen geeignet sind. Hierbei gibt m die Länge der Elemente eines jeweiligen Galois-Feldes an.

Die wichtigste Operation bei der Anwendung der elliptischen Kurvenkryptographie ist die Multiplikation großer Polynome. Nach einer Polynom-Multiplikation in einem finiten Feld sind die möglichen resultierenden Produkte bekanntlich länger als das größte Element des zu Grunde liegenden endlichen Feldes. Deshalb muss nach einer Polynom-Multiplikation eine so genannte Reduktion ausgeführt werden. In dieser Reduktion wird das lange Polynom des resultierenden Produktes auf einen ("äquivalenten") Wert in den Grenzen des Feldes umgerechnet. Diese Operation ist nach jeder Polynom-Multiplikation notwendig.

Da die Multiplikation in der elliptischen Kurvenkryptographie eine Hauptoperation darstellt, ist entsprechend nicht nur die Multiplikationsoperation allein kritisch für die Leistungsfähigkeit (Performance) im Sinne von Schnelligkeit einer ECC-Implementierung sondern auch die Reduktionsoperation

Die Reduktion entspricht der Division mit Rest (Modulo-Operation) in 'normalen' endlichen Feldern. Diese soll anhand eines einfachen Beispiels erläutert werden. Das finite Feld GF(7) besteht aus den Elementen {0,1,2,3,4,5,6}. Eine Multiplikation von 5*4 ergibt 20, was größer als das größte mögliche Element in dem Feld ist. In dem Fall wird 20 durch 7 dividiert und der Rest dieser Division, nämlich 6, ist dann auch das Ergebnis der Multiplikation von 5*4 innerhalb des finiten Feldes (GF(7)).

Binäre finite Felder ($GF(2^m)$) enthalten keine Zahlen, sondern Polynome. Ein Element dieser Felder ist $A(x) = a_{m-1}*x^{m-1} + a_{m-2}*x^{m-2} + ... + a_1*x + a_0$. Die Koeffizienten $a_i$ sind dabei entweder 0 oder 1. Eine wichtige Eigenschaft der Felder ist, dass bei der Addition und Subtraktion von Koeffizienten die XOR-Operation angewendet wird. Entsprechend ist $1+1 \equiv 1-1 \equiv 1$ XOR $1 = 0$.

Die maximale Länge eines Elementes des Feldes $GF(2^m)$ ist m. Die Multiplikation zweier Elemente (A(x)*B(x)) ergibt ein doppelt so langes Polynom $C(x) = A(x)*B(x) = c_{m-2}*2*x^{2m-2} + ... + c_0$. Das Ergebnis hat also eine Länge von 2m-1.

Man kann nun C(x) zerlegen in $C(x) = C1(x)*x^m + C0(x)$. C0(x) hat dabei die Länge, die der maximalen Länge der Polynome des Feldes entspricht. C1(x) ist der über die maximale Feldlänge überstehende Teil, der mittels des Reduktionsprozesses in C0 integriert werden muss.

Diese Reduktion kann man mittels einer kompletten Polynomdivision lösen, was sehr lange dauert. Ein solches Verfahren entspricht genau der oben am Beispiel in GF(7) erläuterten Modulo-Divison.

Es sind alternative, schnellere Möglichkeiten bekannt, diese Reduktion auszuführen. Ein oft genutzter Ansatz ist die multiplikative Reduktion. Multipliziert man C1(x) mit einem Reduktionspolynom R(x) und subtrahiert das entstehende Produkt von C(x), ist das Ergebnis kleiner als das Ausgangspolynom, aber in dem zu Grunde- liegendem Feld äquivalent. Es gilt: $C(x) \equiv C(x-)-C1-(x)*R(x)$. Wiederholt man diese Operation, kommt man auf immer weitere kleinere, aber im zu Grundeliegenden Feld äquivalente Werte. Wenn C1(x) die Länge Null erreicht hat, ist die Reduktion abgeschlossen.

Sind die Länge des Feldes und das Reduktionspolynom R(x) bekannt, kann man sehr effizient eine direkte Verdrahtung der Reduktionslogik realisieren. Dies ist zum Beispiel bekannt aus der Veröffentlichung Saqib, N. A., Rodriguez-Henriquez, F., and Diaz-Perez, A., "A parallel architecture for fast computation of elliptic curve scalar multiplication over GF(2m)", 18th International Parallel & Distributed Processing Symposium (IPDPS), Santa Fe, New Mexico, 26-30 Apr 2004.

Der Nachteil des aus dieser Veröffentlichung bekannten Systems ist jedoch gerade, dass es die Kenntnis der Länge des Feldes und des Reduktionspolynoms R(x) voraussetzt. Es wird daher angestrebt, einen ähnlich effizienten Weg zu finden, der diese Operationen für zur Laufzeit variable Felder mit variablen Reduktionspolynomen in Hardware möglich macht.

Eine aus dem Dokument Eberle, H., Gura, N., and Chang-Shantz, S., "A cryptograhpic processorfor arbitrary elliptic curves over GF(2m)", IEEE 14th International Conference on Application-specific Systems, Architectures and Processors (ASAP), June 24-26, 2003, Seiten 444-454 schon bekannte Möglichkeit ist es, einen kompletten Multiplizierer für den Reduktionsschritt C(x)-C1(x)*R(x) zu nutzen. Eine zusätzliche komplette Multiplikation an dieser Stelle ist für die Schnelligkeitder ECC-Implementierung jedoch sehr negativ.

Aus der US200310208518 A1 (dort Fig. 32) ist es bekannt, bei der multiplikativen Reduktion zentriert ausgerichteter Polynome einen Berechnungsschritt $C'(x)=C1(x)*(M-x^m)+x^{n-m}+CO(x)$ durchzuführen, bis der überstehende Teil des resultierenden Polynoms verschwindet. Hierbei kennzeichnet M ein geeignetes irreduzibles Polynom. Das Verfahren beinhaltet, das Reduktionspolynom ohne den Term $x^m$ um n-m Positionen nach links verschoben abzuspeichern und die Randpositionen links und rechts mit dem Wert Null aufzufüllen. Für eine 233-Bit-Implementierung (m=233) mit $M=x^{233}+x^{74}+1$ auf einer 256-Bit-Hardware (n=256), ist $(M-x^m)*x^{n-m}=(x^{74}+1)*X^{256-233}=X^{97}+X^{23}$. Dieses für den gesamten Reduktionsprozess wiederverwendbare Polynom wird mit dem überstehenden Teil C1(x) multipliziert und zu C0(x) addiert (XOR), bis C1(x) Null ist. Es sind daher wiederholte komplette Polynommultiplikationen notwendig. Abschließend wird das so berechnete äquivalente, reduzierte Polynom durch eine Multiplikation mit $x^m$ nach links verschoben.

Eine in der US2003/0208518 A1 beschriebene Variante (Fig. 33) sieht vor, statt des ursprünglichen Polynoms ein teilweise reduziertes Polynom für die Berechnung von Punktmultiplikationsoperationen zu verwenden, um erst danach abschließend die Reduktion entsprechend dem eben beschriebenen Verfahren vorzunehmen. Auf diese Weise können mit einer Implementierung Operationen in Feldern GF($2^m$) mit unterschiedlichen Werten m vorgenommen werden.

Aus der US2003/0182340 A1 ist eine Restwertberechnungseinrichtung über einem Galois-Feld bekannt, welche mit einem langsamen Takt betrieben wird und besonders geeignet ist für eine Restwertberechnung, welche in einem Kryptographieverfahren unter Verwendung von elliptischen Kurven eingesetzt werden kann. Hierzu wird eine Anordnung aus verschiedenen logischen Funktionen und ein Schema zum Betrieb dieser Anordnung vorgeschlagen. Hierbei werden zwei Ausdrücke über einem Galois-Feld GF ($2^m$) mit einem irreduziblen Polynom als Modulo multipliziert. Hierfür wird einer der beiden Ausdrücke über ein AND-Gatter einem Addierer zugeführt, wenn das jeweilige Steuerungsbit des zweiten Ausdrucks 1 ist, ansonsten wird ein ausschließlich aus 0-Werten bestehender Ausdruck dem Addierer zugeführt. Der Addierer ist hierbei in Form von EXOR-Elementen ausgeführt, da eine Übertragsarithmetik bei GF ($2^m$)-Feldern nicht nötig ist. Abhängig von dem höchstwertigen Bit der Ausgabe des Addierers wird der Modulo-Ausdruck von der Ausgabe des Addierers subtrahiert, wobei der Subtrahierer in dem verwendeten GF ($2^m$)-Feld identisch zu dem Addierer ausgebildet sein kann. Hierdurch wird ein temporärer Restwert berechnet, welcher über einen Verschiebeschaltkreis dem Addierer wieder zugeführt wird. Durch dieses Vorgehen wird verhindert, dass Vielfache des Modulos, welche ohnehin nicht zum Restwert beitragen, addiert werden. Durch entsprechende Wiederholung des beschriebenen Vorgangs werden der Restwert und der Quotient des Produkts der beiden anfänglichen Ausdrücke modulo des angegebenen irreduziblen Polynoms berechnet.

Nachteil der in diesem Dokument beschriebenen Verfahren ist jedoch, dass wiederholte vollständige Polynom-Multiplikationen zur Reduktion durchgeführt werden müssen. Für die Reduktion wird eine Vielzahl von Taktzyklen benötigt.

Das der vorliegenden Erfindung zugrunde liegende technische Problem ist es daher, ein Verfahren und eine Vorrichtung zur Reduktion eines Polynomproduktes anzugeben, das eine in besonders wenigen Taktzyklen durchführbare Reduktion in Feldern unterschiedlicher Länge und mit unterschiedlichen Reduktionspolynomen ermöglicht.

Die Erfindung spiegelt sich in drei Aspekten wieder, wovon zwei Aspekte Verfahren betreffen und ein dritter Aspekt eine Vorrichtung.

Gemäß einem ersten Aspekt der Erfindung wird ein Verfahren zur Reduktion eines einem Polynom C(x) entsprechenden ersten Datenworts mit einer Länge von maximal 2n-1 auf ein zweites Datenwort mit einer Länge von maximal m bereitgestellt. Das zweite Datenwort entspricht in einem binären finiten Feld GF($2^m$), dessen Elemente eine maximale Länge m haben, einem zu C(x) äquivalenten Polynom C"0(x), wobei m entweder kleiner oder gleich n ist. Das Verfahren weist die folgenden Schritten auf:

- Bereitstellen eines Reduktionspolynoms R(x), das ein Trinomial oder ein Pentanomial bildet;

- Partitionieren des ersten Datenworts in ein binäres erstes Sub-Datenwort C0 und ein binäres zweites Sub-Datenwort C1, deren entsprechende Polynome C0(x) und C1(x) die Gleichung $C(x) = C1(x)*x^m + C0(x)$ erfüllen, und Abgreifen des zweiten Sub-Datenwortes zur Bildung eines ersten Summandenterms;

- Rechtsverschieben des zweiten Sub-Datenworts zur Bildung eines zweiten Summandenterms, und Wiederholung des Rechtsverschiebungsschrittes zur Bildung weiterer Summandenterme, bis jedem nicht verschwindenden Term des Reduktionspolynoms, der nicht der Term $x^m$ ist, je ein Summandenterm zugeordnet ist, indem die Schrittweite einer jeweiligen Rechtsverschiebung gleich der Differenz von m und der Ordnung eines jeweiligen nicht verschwindenden Terms des Reduktionspolynoms ist;

- Addieren der gebildeten Summandenterme zum ersten Sub-Datenwort zur Bildung eines Summendatenwortes;

- wenn das so ermittelte Summendatenwort eine Länge größer als m hat, Anwendung der Verfahrensschritte ab dem Schritt des Partitionierens auf das gebildete Summandendatenwort, bis das so ermittelte Summendatenwort eine Länge von maximal m hat und somit das zweite Datenwort bildet.

Das erfindungsgemäße Verfahren zur Reduktion eines ersten Datenwortes ermöglicht in einer Hardwareimplementierung eine besonders schnelle Durchführung in wenigen Taktzyklen. In einem bevorzugten Ausführungsbeispiel, das weiter unten beschrieben wird, gelingt die Reduktion sogar in nur einem Taktzyklus.

Das erfindungsgemäße Verfahren beinhaltet verschiedene Maßnahmen, die zu dieser Beschleunigung der Reduktionsoperation gegenüber bekannten Verfahren führen.

Zunächst wird erfindungsgemäß ein Reduktionspolynom $R(x)$ bereitgestellt, das ein Trinomial oder ein Pentanomial bildet. Trinomiale sind Polynome mit drei besetzten Termen. Pentanomiale sind Polynome mit fünf besetzten Termen. Mit dieser Maßnahme macht sich das erfindungsgemäße Verfahren die Eigenschaften derjenigen binären finiten Felder zunutze, die in der elliptischen Kurvenkryptographie in der Praxis zum Einsatz kommen, weil sie von Standardisierungsgremien wie beispielsweise dem amerikanischen National Institut of Standards and Technology (NIST) empfohlen werden.

Da zusätzlich die zweithöchste besetzte Stelle der empfohlenen Reduktionspolynomen in aller Regel kleiner als $m/2$ ist, kann eine komplette Reduktion nach zwei aufeinanderfolgenden Multiplikationen vollendet werden.

Weiterhin werden bei dem erfindungsgemäßen Verfahren Multiplikationsschritte durch flexible Verschiebeoperationen realisiert. Dies führt zu einer wesentlichen Vereinfachung der erforderlichen Multiplikationsschritte und gleichzeitig zu einer flexiblen Hardwareimplementierung, die es erlaubt, Produkte von Datenworten mit unterschiedlicher (in einem jeweiligen Produkt jedoch gleicher) Länge zu reduzieren.

Mathematisch kann das erfindungsgemäße Reduktionsverfahren wie folgt beschrieben werden. Ausgehend von einem Polynom der Form

$$C(x) = C1(x) * x^m + C0(x) \tag{1}$$

Wird in einer ersten Iteration der Reduktionsoperation die folgende Differenz berechnet :

$$C'(x) = C(x) - C1(x) * R(x) \tag{2}$$

Nachfolgend wird erläutert, wie diese Differenz erfindungsgemäß besonders einfach berechnet wird. Gleichung (2) lässt sich auch darstellen als

$$C'(x) = C1(x) * x^m + C0(x) - (C1(x) * x^m + C1(x) * x^m/x^{S3} + C1(x) * x^m/x^{S2} + $$
$$C1(x) * x^m/x^{S1} + C1(x) * x^m/x^{S0}) \tag{3}$$

Gleichung (3) ist äquivalent mit

$$C'(x) = C0(x) - (C1(x) * x^m/x^{S3} + C1(x) * x^m/x^{S2} + C1(x) * x^m/x^{S1} + C1(x) * x^m/x^{S0}) \tag{4}$$

Hierbei entsprechen die Divisionen durch die Terme $x^{S3}$, $x^{S2}$, $x^{S1}$, $x^{S0}$ Rechtsverschiebeoperationen um eine Schrittweite, die der Ordnung der nicht verschwindenden Terme $x^{S3}$, $x^{S2}$, $x^{S1}$ und $x^{S0}$ des Reduktionspolynoms entspricht.

In zahlreichen Fällen ist nach dieser erstmaligen Anwendung des Reduktionspolynoms noch keine vollständige Reduktion erzielt. Es erfolgt daher ein nächster Iterationsschritt der auf einer Darstellung des Zwischenergebnisses $C'(x)$ in der Form:

$$C'(x) = C1'(x) * x^m + C0'(x) \qquad (5)$$

basiert. Die maximale Länge des Zwischenergebnisses $C1'(x)$ ist $m - s3 - 1$. Die erneute Anwendung des Reduktionspolynoms erfolgt gemäß der Gleichung

$$C''(x) = C'(x) - C1'(x) * R(x) = C1''(x) * x^m + C0''(x) \qquad (6)$$

Dabei ist, falls $m < 2 * s3$, die Ordnung des Terms $C1''(x)$ Null. Die Reduktion benötigt daher in diesem Fall nur zwei Iterationen.

Der im erfindungsgemäßen Verfahren enthaltene Schritt des Partitionierens des ersten Datenworts beinhaltet nicht notwendiger Weise eine physikalische Aufspaltung des ersten Datenworts in zwei getrennte Sub-Datenworte oder gar ihre getrennte Abspeicherung in Speichern oder Registern. Wesentlich für das Partitionieren ist allein, dass im weiteren Verlauf des Verfahrens die Sub-Datenworte getrennt verwendet werden. Hierzu kann in einer vorteilhaften Hardware-Implementierung jedoch schon das getrennte Verdrahten der Bitpositionen der Sub-Datenworte in einem Register, welches das vollständige erste Datenwort enthält, mit jeweils nachgeschalteten Operator-Implementierungen genügen. Unter der Länge eines gebildeten Summandendatenwortes ist die höchstwertige Position zu verstehen, deren Wert ungleich Null ist. Wenn also ein Summanden-Datenwort eine Länge von größer als $m$ hat, bedeutet, dass auf Positionen $> m$ Werte ungleich Null vorhanden sind.

Der im erfindungsgemäßen Verfahren enthaltene Schritt des Rechtsverschiebens des zweiten Sub-Datenworts zur Bildung eines zweiten Summandenterms, und die Wiederholung des Rechtsverschiebungsschrittes zur Bildung weiterer Summandenterme, ist so zu verstehen, dass der zweite Summandenterm im Ergebnis gegenüber dem zweiten Sub-Datenwort (C1) in seiner ursprünglichen Position im ersten Datenwort (C0 + C1) nach rechts verschoben verwendet wird. Dies kann nicht nur durch eine tatsächliche Rechtsverschiebung, sondern beispielsweise auch auf dem Wege erreicht werden, dass das zweite Sub-Datenwort zunächst rechtsbündig abgegriffen und dann um eine jeweils entsprechend anzupassende Schrittweite nach links verschoben wird. Offensichtlich ist das Ergebnis jedoch dasselbe.

Gemäß einem zweiten Aspekt der vorliegenden Erfindung wird ein Verfahren zur Reduktion eines einem Polynom $C(x)$ entsprechenden ersten Datenworts mit einer Länge von maximal $2n-1$ auf ein zweites Datenwort mit einer Länge von maximal $m$ bereitgestellt, das in einem binären finiten Feld $GF(2^m)$, dessen Elemente eine maximale Länge $m$ haben, einem zu $C(x)$ äquivalenten Polynom $C''0(x)$ entspricht, wobei $m$ entweder kleiner oder gleich $n$ ist, mit den Schritten:

- Bereitstellen eines Reduktionspolynoms $R(x)$, das ein Trinomial oder ein Pentanomial bildet;

- Partitionieren des ersten Datenworts in ein binäres erstes Sub-Datenwort C0 und ein binäres zweites Sub-Datenwort C1, deren entsprechende Polynome $C0(x)$ und $C1(x)$ die Gleichung $C(x) = C1(x) * x^m + C0(x)$ erfüllen, und Abgreifen des zweiten Sub-Datenwortes zur Bildung eines ersten Summandenterms;

- Rechtsverschieben des zweiten Sub-Datenworts zur Bildung eines zweiten Summandenterms, und Wiederholung des Rechtsverschiebungsschrittes zur Bildung weiterer Summandenterme, bis jedem nicht verschwindenden Term des Reduktionspolynoms, der nicht der Term $x^m$ ist, je ein Summandenterm zugeordnet ist, indem die Schrittweite einer jeweiligen Rechtsverschiebung gleich der Differenz von $m$ und der Ordnung eines jeweiligen nicht verschwindenden Terms des Reduktionspolynoms ist;

- Addieren der gebildeten Summandenterme, mit Ausnahme des ersten Summandenterms, zum ersten Datenwort (, nachfolgend auch als erster Addierschritt bezeichnet);

- wenn das so ermittelte Summendatenwort eine Länge größer als $m$ hat, Anwendung der Verfahrensschritte ab dem Schritt des Partitionierens auf das gebildete Summandendatenwort, bis das so ermittelte Summendatenwort eine Länge von maximal $m$ hat;

- Addieren des ersten Summandenterms und, im genannten Falle einer Anwendung der Verfahrensschritte ab dem Schritt des Partitionierens auf das gebildete Summandendatenwort, jedes weiteren zwischenzeitlich ermittelten zweiten Sub-Datenworts zum zuletzt ermittelten Summendatenwort zur Bildung des zweiten Datenworts (, nachfolgend auch als zweiter Addierschritt bezeichnet).

Das Verfahren des zweiten Aspekts der Erfindung unterscheidet sich von dem des ersten Aspekts der Erfindung darin, dass die jeweiligen ersten Summandenterme, d. h. die jeweiligen zweiten Sub-Datenworte, erst abschließend, nach Durchführung aller erforderlichen Iterationen zur Reduktion zum zuletzt ermittelten Summendatenwort addiert werden, um das vollständig reduzierte zweite Datenwort zu bilden.

Der zusätzliche Vorteil des Verfahrens des zweiten Aspekts der Erfindung liegt darin, dass auf diese Weise noch kompaktere Hardware-Implementierungen möglich werden. Denn in einer erfindungsgemäßen Reduktionsvorrichtung muss eine darin vorgesehene Schiebeeinheit zur Durchführung dieses Verfahrens nur noch maximal drei Rechtsschiebe-Operationen durchführen. Dies spart Chipfläche.

Die Verfahrensführung dieses Aspekts der Erfindung beruht auf der Einsicht, dass alle irreduziblen Polynome die Struktur:

$$R(x) = x^m + ... + 1 \qquad\qquad (7)$$

haben. Die Terme $x^m$ und 1 sind daher Teil jedes Reduktionspolynoms $R(x)$. Da die niedrigste Ordnung des Reduktionspolynoms immer Null ($x^0 = 1$) ist, und s0 der Differenz von m und Null entspricht, ist s0 immer äquivalent zu m. Daher wird für diesen Term tatsächlich keine Rechtsverschiebung benötigt und kann die erforderliche Addition im Anschluss an die Iterationen erfolgen.

Weitere Vorteile dieses Verfahrens ergeben sich aus der nachfolgenden Beschreibung von Ausführungsbeispielen, die sich jedoch ebenso auf das Verfahren gemäß dem ersten Aspekt der Erfindung beziehen. Die Ausführungsbeispiele sind miteinander kombinierbar, soweit nicht ausdrücklich beschrieben ist, dass es sich um zueinander alternative Ausführungsbeispiele handelt.

Gemäß einem bevorzugten Ausführungsbeispiel der erfindungsgemäßen. Verfahren, bei dem das erste Datenwort eine Länge von weniger als 2n-1 hat, erfolgt vor der Rechtssschiebeoperation ein zusätzlicher erster Justierschritt. Der erste Justierschritt beinhaltet ein Linksverschieben des ersten Datenworts um eine Auffüllschrittweite und ein beiderseitiges Anfügen einer der Auffüllschrittweite entsprechenden Anzahl Nullen an das erste Datenwort. Die Linksverschiebung und das Anfügen der Nullen erfolgt derart, dass die Länge des so modifizierten ersten Datenworts 2n-1 beträgt und dass im modifizierten ersten Datenwort diejenigen Terme des dem ersten Datenwort entsprechenden Polynoms C(x), die eine Ordnung größer als m haben, an denselben Bitpositionen angeordnet sind wie wenn das erste Datenwort schon anfänglich die Länge 2n-1 gehabt hätte. Auf diese Weise ist es möglich, auch kleinere Datenworte in ein und derselben Hardware-Implementierung zu reduzieren. Damit wird die Flexibilität einer Hardware-Implementierung erhöht.

Vorzugsweise wird bei dieser Verfahrensführung ein zweiter Justierschritt durchgeführt, der beim Verfahren gemäß dem ersten Aspekt der Erfindung insbesondere nach dem Addieren der gebildeten Summandenterme zum ersten Sub-Datenwort zur Bildung des Summanden-Datenwortes im letzten Iterationsschritt durchgeführt wird. Beim Verfahren gemäß dem zweiten Aspekt der Erfindung wird der zweite Justierschritt insbesondere vordem zweiten Addierschritt durchgeführt.

Bei einer besonders bevorzugten Ausführungsform der erfindungsgemäßen Verfahren wird das irreduzible Polynom allein durch die Potenzen der nicht verschwindenden Terme des Reduktionspolynoms, die nicht der Term $x^m$ sind, repräsentiert. Das bedeutet, dass das Reduktionspolynom nicht in der vollen Länge eines Datenwortes gespeichert wird, sondern nur in der Form (s1, s2, s3). Die Verfahrensführung wird dadurch weiter vereinfacht und beschleunigt. Der zusätzliche Parameter der bekannten maximalen Länge m von Datenworten des binären finiten Feldes, der zu einer eindeutigen Kenntnis des irreduziblen Polynoms benötigt wird, kann, muss jedoch nicht zusammen mit den Parametern (s1, s2, s3) abgespeichert werden, da er auch anderweitig vorhanden ist.

Ein dritter Aspekt der vorliegenden Erfindung betrifft ein asymmetrisches Kryptographieverfahren zur Verwendung in einer elektronischen Kryptographievorrichtung. Das Verfahren umfasst ein Reduzieren eines einem Polynom C(x) entsprechenden ersten Datenworts mit einer Länge von maximal 2n-1 auf ein zweites Datenwort mit einer Länge von maximal m, das in einem binären finiten Feld GF($2^m$), dessen Elemente eine maximale Länge m haben, einem zu C(x) äquivalenten Polynom C''0(x) entspricht, wobei m entweder kleiner oder gleich n ist, gemäß einem Verfahren nach dem ersten oder zweiten Aspekt der Erfindung, oder nach einer der im Rahmen dieser Anmeldung beschriebenen Ausführungsformen der Verfahren nach dem ersten oder zweiten Aspekt der Erfindung.

Als Kryptographieverfahren wird hier ein Verfahren zur Verschlüsselung oder Entschlüsselung einer in Form von insbesondere in Form eines Datenworts dargestellten Nachricht verstanden. Als Nachricht wird zum Beispiel auch ein Teilstück eines Stroms von Daten verstanden, das die Form eines Datenworts annimmt.

Eine Ausführungsform des Kryptographieverfahrens des dritten Aspekts der Erfindung bildet ein elliptisches Kurvenkryptographieverfahren, umfassend, vor dem Reduzieren das Multiplizieren zweier, Faktor-Polynomen A(x) und B(x) entsprechenden Faktor-Datenworte zu dem einem Polynom C(x) entsprechenden ersten Datenwort mit einer Länge von maximal 2n-1.

Ein weiterer, vierter Aspekt der Erfindung betrifft ein Verfahren zur Berechnung einer digitalen Signatur. Das Verfahren umfasst ein elliptisches Kryptographieverfahren mit einem Reduzierverfahren nach dem ersten oder zweiten Aspekt der Erfindung oder nach einer der im Rahmen dieser Anmeldung beschriebenen Ausführungsformen der Verfahren nach dem ersten oder zweiten Aspekt der Erfindung.

Ein fünfter Aspekt der Erfindung betrifft eine Vorrichtung zur Reduktion eines einem Polynom C(x) entsprechenden ersten Datenworts mit einer Länge von maximal 2n-1 auf eine zweites Datenwort mit einer Länge von maximal m, das in einem binären finiten Feld. GF($2^m$), dessen Elemente eine maximale Länge m haben, einem zu C(x) äquivalenten Polynom C"0(x) entspricht, wobei m entweder kleiner oder gleich n ist, mit:

- einem Speicher, der eine Repräsentation mindestens eines Reduktionspolynoms R(x) enthält, das ein Trinomial oder ein Pentanomial bildet;

- einer Selektionseinheit, die ausgebildet ist, ein binäres Sub-Datenwort aus dem ersten Datenwort zu abzugreifen, dessen entsprechendes Polynom C1(x) die Gleichung C(x) = C1(x) * $x^m$ + C0(x) erfüllt und das einen ersten Summandenterm bildet;

- einer Schiebeeinheit, die mit der Selektionseinheit verbunden und ausgebildet ist, das Sub-Datenwort zur Bildung eines zweiten oder weiterer Summandenterme um eine jeweils vorbestimmte Schrittweite nach rechts zu verschieben und die gebildeten Summandenterme auszugeben;

- einer Addiereinheit, die mit der Schiebeeinheit verbunden und ausgebildet ist, einen jeweiligen Summandenterm sowie die von der Schiebeeinheit ausgegebenen Summanden zum ersten Datenwort zu addieren; und

- einer Steuereinheit, die ausgebildet ist,

  - die Schrittweite einer jeweiligen, von der Schiebeeinheit auszuführenden Rechtsverschiebung zur Bildung eines Summandenterms als Differenz von m und der Ordnung eines jeweiligen nicht verschwindenden Terms des Reduktionspolynoms zu bestimmen,

  - die Schiebeeinheit zur wiederholten Durchführung des Rechtsverschiebungsschritts für eine Bildung weiterer Summandenterme mit jeweils neu bestimmter Schrittweite zu instruieren, bis jedem nicht verschwindenden Term eines jeweils vorgegebenen Reduktionspolynoms, der nicht der Term $x^m$ ist, je ein Summandenterm zugeordnet ist,

  - die Berechnungseinheit, die Schiebeeinheit und die Addiereinheit erforderlichenfalls erneut zu aktivieren, bis ein ermitteltes Summendatenwort eine Länge von maximal m hat und somit das zweite Datenwort bildet.

Die erfindungsgemäße Reduktionsvorrichtung, die gleichbedeutend auch als Reduzierungsvorrichtung bezeichnet wird, ermöglicht eine schnelle Reduktion von Datenwörtern. Sie bietet die Voraussetzung für eine hohe Flexibilität, die in bevorzugten Ausführungsbeispielen die Reduktion von Datenwörtern unterschiedlicher Länge ermöglicht.

Gegenüber bekannten Vorrichtungen gelingt dies mit einer besonders einfachen Struktur, die ohne jegliche dezidierte Multiplikationseinheit auskommt. Durch entsprechende Steuerung der flexiblen Schiebeeinheit, die ein selektiertes Sub-Datenwort um eine jeweils vorbestimmte Schrittweite nach rechts verschiebt, kann in Zusammenwirkung mit einer Addiereinheit eine multiplikative Reduktion durch nur wenige einfache Schiebe- und Addieroperationen ausgeführt werden. Die Tatsache, dass die Steuereinheit ausgebildet ist, die Berechnungseinheit, die Schiebeeinheit und die Addiereinheit erforderlichenfalls erneut zu aktivieren, bis ein ermitteltes Summendatenwort eine Länge von maximal m hat und somit das zweite Datenwort bildet, ist nicht notwendigerweise mit einem Prüfschritt verbunden, in dem die Länge eines teilreduzierten Datenwortes ermittelt wird. In einer bevorzugten Implementierung findet vielmehr keine Kontrolle auf die Länge statt. Dabei macht man sich zunutze, dass ein geeignet ausgewähltes Reduktionspolynom gewährleistet, dass die Reduktion nach 2 Iterationen komplett ist.

Nachfolgend werden Ausführungsbeispiele der erfindungsgemäßen Vorrichtung beschrieben. Die Ausführungsbeispiele können miteinander kombiniert werden, soweit sie nicht ausdrücklich als alternative Ausführungsbeispiele beschrieben sind.

Bei einem bevorzugten Ausführungsbeispiel der Reduzierungsvorrichtung ist die Steuereinheit ausgebildet, die Addiereinheit im Falle einer Wiederholung der Verfahrensschritte ab dem Schritt des Ermittelns eines binären Sub-Datenworts, zu instruieren, die jeweils gebildeten Summandenterme mit Ausnahme des ersten Summandenterms zum jeweiligen ersten Datenwort zu addieren, und nach einer Feststellung, dass ein ermitteltes Summendatenwort eine Länge hat, die nicht größer als m ist, zur Bildung des zweiten Datenworts jeden zwischenzeitlich ermittelten ersten Summandenterm zum ermittelten Summendatenwort zu addieren.

Dieses Ausführungsbeispiel realisiert das Verfahren des zweiten Aspekts der Erfindung.

Ein weiteres bevorzugtes Ausführungsbeispiel enthält eine erste und eine zweite Justiereinheit. Die erste Justiereinheit ist ausgebildet, ein eingehendes erstes Datenwort mit einer Länge von weniger als 2n-1 vor der Rechtsschiebeoperation um eine Auffüllschrittweite nach links zu verschieben und beiderseits des ersten Datenwortes eine der Auffüllschrittweite entsprechende Anzahl Nullen an das erste Datenwort anzufügen, derart, dass die Länge des so modifizierten ersten Datenworts 2n-1 beträgt und dass im modifizierten ersten Datenwort diejenigen Terme des dem ersten Datenwort entsprechenden Polynoms C(x), die eine Ordnung größer als m haben, an denselben Bitpositionen angeordnet sind wie wenn das erste Datenwort schon anfänglich die Länge 2n-1 gehabt hätte.

Die zweite Justiereinheit ist ausgebildet, das ermittelte Summendatenwort der Länge von maximal m um die Auffüllschrittweite nach rechts zu verschieben und die anfänglich angefügten Nullen zu entfernen.

Zur Beschleunigung der Reduktion enthält die Schiebeeinheit vorzugsweise eine Anzahl parallel geschalteter Rechtsschieber, denen das Sub-Datenwort zugeführt ist.

Alternativ enthält die Schiebeeinheit genau einen Rechtsschieber, und die Steuereinheit ist ausgebildet, die Wiederholung des Rechtsverschiebungsschrittes zur Bildung weiterer Summandenterme durch zusätzliches Rechtsschieben des zuletzt vom Rechtsschieber ausgegebenen Summandenterms um eine jeweilige Differenzschrittweite durchzuführen, wobei die jeweilige Differenzschrittweite die Differenz zwischen den Rechtsverschiebungen aufeinander folgender Summandenterme jeweils gegenüber dem ersten Summandenterm ist.

Einen sechsten Aspekt der Erfindung bildet eine Kryptographievorrichtung, insbesondere eine elektronische Kryptographievorrichtung, die eine Reduktionsvorrichtung nach dem fünften Aspekt der Erfindung oder ein im Rahmen dieser Anmeldung offenbartes Ausführungsbeispiel dieser Reduktionsvorrichtung enthält.

Die Kryptographievorrichtung ist in einer Ausführungsform zur Verschlüsselung oder Entschlüsselung von Daten nach einem Verfahren der elliptischen Kurvenkryptographie ausgebildet ist. Das beinhaltet selbstverständlich, dass die Kryptographievorrichtung entweder nur zur Verschlüsselung oder nur zur Entschlüsselung oder sowohl zur Verschlüsselung als auch zur Entschlüsselung von Daten ausgebildet ist.

In einer weiteren Ausführungsform enthält die elektronische Kryptographievorrichtung eine Multipliziereinheit, die ausgebildet ist zum Multiplizieren zweier, Faktor-Polynomen A(x) und B(x) entsprechenden Faktor-Datenworte zu einem dem Polynom C(x) entsprechenden ersten Datenwort mit einer Länge von maximal 2n-1. Die Multipliziereinheit kann in mit der Reduktionsvorrichtung in ein und demselben Chip integriert sein. Sie kann aber auch auf einem separaten Chip vorgesehen sein.

Nachfolgend werden die Erfindung und verschiedene Ausführungsbeispiele anhand der beiliegenden Figuren näher erläutert. Es zeigen

Fig. 1                  ein Diagramm zur Erläuterung einer einfachen Polynomreduktion;

Fig. 2a) und 2b)    zwei alternative Ausführungsformen des erfindungsgemäßen Verfahrens;

Fig. 3                  ein weiteres alternatives Ausführungsbeispiel des erfindungsgemä- ßen Verfahrens;

Fig. 4                  ein Blockdiagramm eines Ausführungsbeispiels eines flexiblen Redu- zierers;

Fig. 5                  ein Blockdiagramm zur Erläuterung einer alternativen Struktur einer Reduziereinheit für den flexiblen Reduzierer der Figur 4.

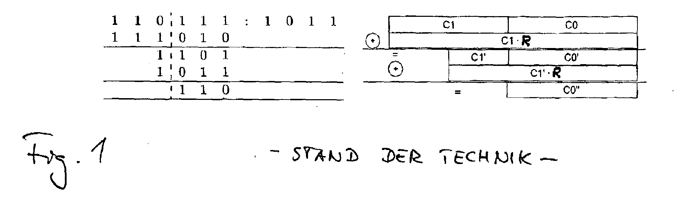

Figur 1 zeigt ein Diagramm zur Erläuterung einer einfachen Polynomreduktion. Das Grundproblem der Polynomreduktion in finiten binären Feldern beruht darauf, dass eine Polynommultiplikation ein erstes Datenwort erzeugt, das eine größere Länge hat als die maximale Länge m des Feldes. Anstelle von der Feldlänge spricht man auch vom Feldgrad. Um das Polynomprodukt in das binäre finite Feld einzupassen, muss es reduziert werden. Der Reduktionsprozess entspricht der Bestimmung eines zum anfänglichen Datenwort äquivalenten Datenwort im binären finiten Feld $GF(2^m)$. Die Operation entspricht der bekannten Modulo-Operation in Primfeldern.

Ein naheliegender Reduktionsansatz besteht demnach darin, dass anfängliche erste Datenwort durch das irreduzible Polynom zu dividieren. Der Rest dieser Division ist das reduzierte Datenwort, das hier auch als zweites Datenwort bezeichnet wird.

Eine alternative Methode zur Reduktion bildet die multiplikative Reduktion. Bei diesem Verfahren wird der überhängende Teil des Datenwortes, der hier auch als zweites Sub-Datenwort bezeichnet wird, mit dem Reduktionspolynom multipliziert und vom anfänglichen ersten- Datenwort subtrahiert. Die Subtraktion entspricht bekanntlich wie die Addition einer XOR-Verknüpfung.

Im in Figur 1 dargestellten Beispiel beträgt die maximale Feldlänge des verwendeten binären finiten Feldes m = 3. Nach einem ersten Iterationsschritt entsteht ein Summanden-Datenwort C'(x), das sich wiederum als $C1'(x) * x^m + C0'(x)$ darstellen lässt. Das den überhängenden Teil bildende zweite Sub-Datenwort C1' konnte also gegenüber dem anfänglichen ersten Datenwort verkleinert werden. Eine weitere-Reduktion ist jedoch noch erforderlich, die durch Multiplikation des zweiten Sub-Datenworts C1'(x) mit dem Reduktionspolynom R bewerkstelligt wird. Wie im linken Teil des Diagramms der Figur 1 ersichtlich ist, ist nach diesen zwei Reduktionsschritten das anfängliche erste Datenwort 110111 durch zweifache Multiplikation des jeweils überhängenden zweiten Sub-Datenwortes mit dem irreduziblen Polynom 1011 auf das äquivalente Datenwort 110 im Feld $GF(2^3)$ reduziert worden.

Es wird betont, dass das Beispiel der Figur 1 nur zur Veranschaulichung des Prinzips dient. Das verwendete Zahlenbeispiel ist zur Erläuterung gewählt und insofern für den Anwendungsfall uncharakteristisch als die Länge des ersten Datenwortes hier 6 ist. Das entspricht 2*m, während nach einer Multiplikation ist die Länge des zu reduzierenden Datenworts nicht länger als 2*m-1 ist.

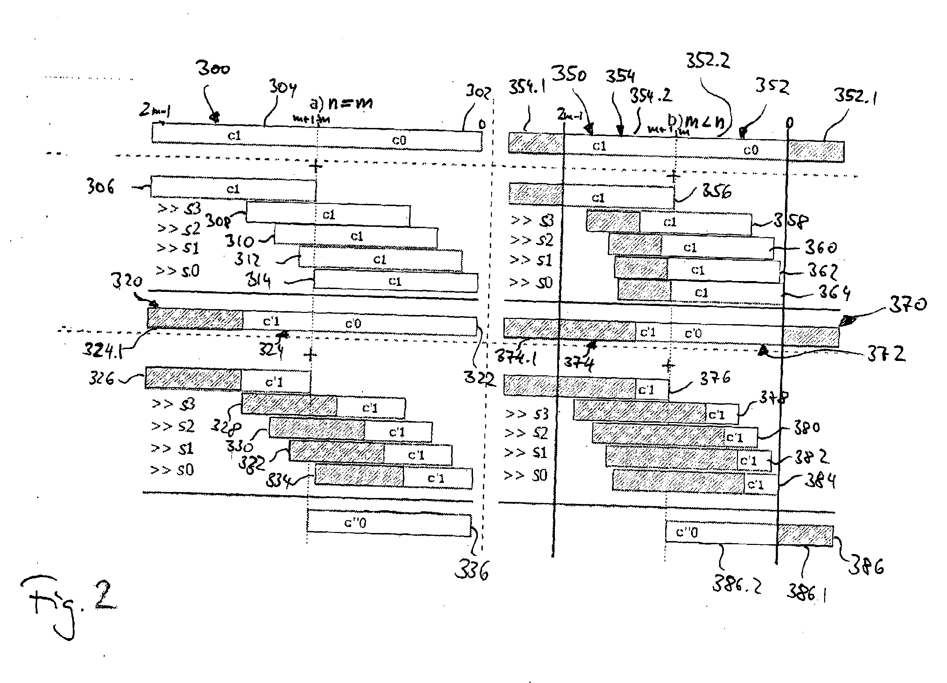

Die Figuren 2a) und 2b) zeigen zwei alternative Ausführungsformen des erfindungsgemäßen Verfahrens. Die in den Figuren 2a) und 2b) dargestellte Lösung basiert auf den Eigenschaften der finiten binären Felder, die beispielsweise von der NIST für die elliptische Kurvenkryptographie empfohlen sind. Da alle zusätzlich empfohlenen Reduktionspolynome entweder Trinomiale oder Pentanomiale sind, kann man eine Multiplikation durch 3 oder 5 aufsummierte Schiebeoperationen ersetzen. Da zusätzlich die zweithöchste besetzte Stelle in den Reduktionspolynomen in der Regel kleiner als m/2 ist, ist die komplette Reduktion nach zwei aufeinanderfolgenden Multiplikationen vollendet. Der entsprechende Reduktionsprozess wird anhand zweier Fälle in den Figuren 2a) und 2b) verdeutlicht.

Figur 2a) zeigt das erfindungsgemäße Verfahren für den Fall, dass die Länge des in Hardware zulässigen Feldes genau der Länge des Feldes entspricht (m = n), auf dem eine vorangegangene Polynommultiplikation durchgeführt wurde. Ein erstes, nicht reduziertes Datenwort 300 der Länge 2n-1 ist in zwei Sub-Datenworte 302 und 304 partitionierbar. Ein erstes Sub-Datenwort C0 reicht von niedrigsten Bitposition bis zur Länge m des binären finiten Felds $GF(2^m)$. Ein zweites Sub-Datenwort C1 304 entspricht dem überhängenden Teil des ersten Datenworts 300 und hat die Länge 2n-m-1.

Die erwähnte Partitionierung des ersten Datenworts 300 in die zwei Sub-Datenwörter 302 und 304 benötigt keinen tatsächlichen Zerlegungsschritt. Es genügt, die Bits der entsprechenden Sub-Datenwörter für die nachfolgenden Rechnungsschritte von ihren jeweiligen Positionen separat abzugreifen.

Das zweite Sub-Datenwort 304 wird anschließend in verschiedenen Kopien um unterschiedliche Schrittweiten nach rechts verschoben. Dies ist in Figur 2a) durch die fünf Kopien 306 bis 314 des zweiten Sub-Datenwortes 304 schematisch symbolisiert. Jede Kopie ist um eine für sie aufgrund des verwendeten Reduktionspolynoms vorbestimmte Schrittweite nach rechts verschoben. Die Anzahl der tatsächlich verschobenen Summandenterme 308 bis 314 entspricht der Anzahl der nicht verschwindenden Terme vorbekannten Reduktionspolynoms R(x), die nicht den Term $x^m$ bilden. Die Kopie 306 muss dagegen nicht verschoben werden. Die Schrittweite einer jeweiligen Rechtsverschiebung ist gleich der Differenz von m und der Ordnung eines jeweiligen nicht verschwindenden Terms des Reduktionspolynoms.

Die Ordnung eines als Beispiel angenommen Terms $x^{74}$ eines Reduktionspolynoms R(x) ist 74. Im Feld GF ($2^{233}$) wird für diesen Term ein Summandenterm aus dem zweiten Sub-Datenwort 304 erzeugt, der um 159 Positionen nach rechts verschoben ist. Die in Figur 2 angezeigten Parameter s0 bis s3 repräsentieren die jeweilige Schrittweite einer jeweiligen Rechtsverschiebung.

Durch anschließendes Addieren der gebildeten Summandenterme 306 bis 314 zum- ersten Sub-Datenwort 302 (C0) entsteht ein Zwischenergebnis C'(x) = C'0(x) + C'1(x), das als Block 320 dargestellt ist und zwei entsprechende Sub-Datenworte 322 und 324 enthält. Ein schraffiert gekennzeichneter Bereich 324.1 enthält aufgrund der bis hier durchgeführten Verfahrensschritte lediglich Nullen.

Da jedoch das so gebildete Summendatenwort 320 noch nicht vollständig reduziert ist, werden die Schritte des Abgreifens des zweiten Sub-Datenwortes 324 und die Rechtsverschiebung des zweiten Sub-Datenwortes 324 entsprechend den Parametern s0 bis s3 des irreduziblen Polynoms R, wie oben erläutert, erneut durchgeführt. Entsprechende rechtsverschobene Kopien 326 bis 334 des zweiten Sub-Datenwortes 324 sind in Figur 2a) dargestellt.

Es versteht sich, dass anstelle der parallelen Verschiebung von Kopien auch serielle Verschiebeschritte an ein und demselben Sub-Datenwort vorgenommen werden können. Schneller ist jedoch die parallele Erzeugung der rechtsverschobenen Kopien mit verschiedenen, parallel geschalteten Rechtsschiebern.

Da der Term mit der zweihöchsten gesetzten Ordnung im Reduktionspolynom weniger als die Hälfte des maximalen Grades m beträgt, sind lediglich zwei aufeinanderfolgende Iterationsschritte für eine vollständige Reduktion erforderlich.

Das nach erneut durchgeführter Addition der Summandenterme 326 bis 334 zum ersten Sub-Datenwort 322 entstehende Summendatenwort 336 hat daher lediglich die maximale Länge m. Es bildet das gesuchte reduzierte, zweite Datenwort.

Figur 2b) zeigt ein dem Verfahren der Figur 2a) entsprechendes Verfahren für den Fall, dass die maximale Feldlänge der eingehenden Datenworte kleiner ist als die zulässige Datenwortbreite n des erfindungsgemäßen Reduzierers.

Zusätzlich zu den in Figur 1 dargestellten Verfahrensschritten, wird anfänglich ein erster Justierschritt durchgeführt, mit dem erreicht wird, dass die Länge des so modifizierten ersten Datenwortes gleich der hardwaremäßig unterstützten Länge 2n-1 beträgt und dass im so modifizierten ersten Datenwort 350 diejenigen Terme des dem ersten Datenwort entsprechenden Polynom C(x), die eine Ordnung größer als m haben, an denselben Bitpositionen angeordnet sind, wie wenn das erste Datenwort 350 schon anfänglich die Länge 2n-1 gehabt hätte. Im Ergebnis entspricht die so durchgeführte Linksverschiebung im ersten Justierschritt eine Verschiebung um (n-m), wobei n die größte hardwaremäßig unterstützte Länge eines Datenwortes bedeutet. Am Eingang des Reduzierers ist die unterstützte Wortbreite dementsprechend 2n-1.

Die Schrittweite dieser Linksverschiebung im ersten Justierschritt wird auf Auffüllschrittweite bezeichnet, weil die auf diese Weise entstehenden Bitpositionen in den Feldern 352.1 und 354.1 am Rande der Sub-Datenwörter 352 und 354 mit Nullen aufgefüllt werden.

Mit diesem so modifizierten ersten Datenwort 350 wird anschließend das Reduzierverfahren wie in Figur 2a) beschrieben. Dabei werden in einem ersten Iterationsschritt Summandenterme 356 bis 364 gebildet und zum ersten Sub-Datenwort 352 addiert. Das auf diese Weise erhaltene Summen-Datenwort 370 enthält in seinem überhängenden zweiten Sub-Datenwort 374 einen Block 374.1, der vollständig aus Nullen besteht. Die verbleibenden nicht verschwindenden Bitpositionen des überhängenden zweiten Sub-Datenwortes 374 werden in einem zweiten Iterationsschritt durch Bildung von Summandentermen 376 bis 384 und Addition zum ersten Sub-Datenwort 372 beseitigt, wodurch ein Summen-Datenwort 386 entsteht. Dieses wird in einem abschließenden zweiten Justierschritt um die gleiche Anzahl Bitpositionen, also um die Auffüllschrittweite nach rechts verschoben, um den rechtsseitigen Block 386.1, der anfänglich durch Anfügung von Nullen entstanden war, zu beseitigen. Der verbleibende Block 386.2 entspricht dem gesuchten zweiten Datenwort, das zum ersten Datenwort äquivalent ist.

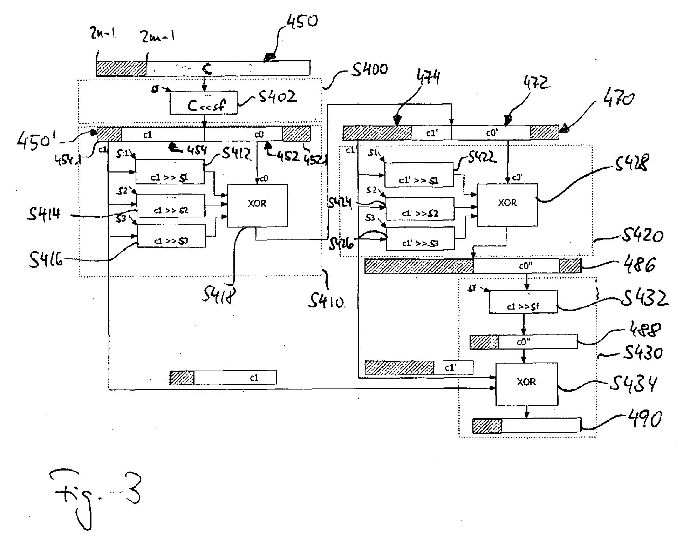

Figur 3 zeigt einen alternativen Verfahrensfluss für den Fall m < n, der auch der Verfahrensführung der Figur 2b) zugrunde lag. Die Darstellung in Figur 3 ist in vier Hauptverfahrensblöcke S400, S410, S420 und S430 unterteilt.

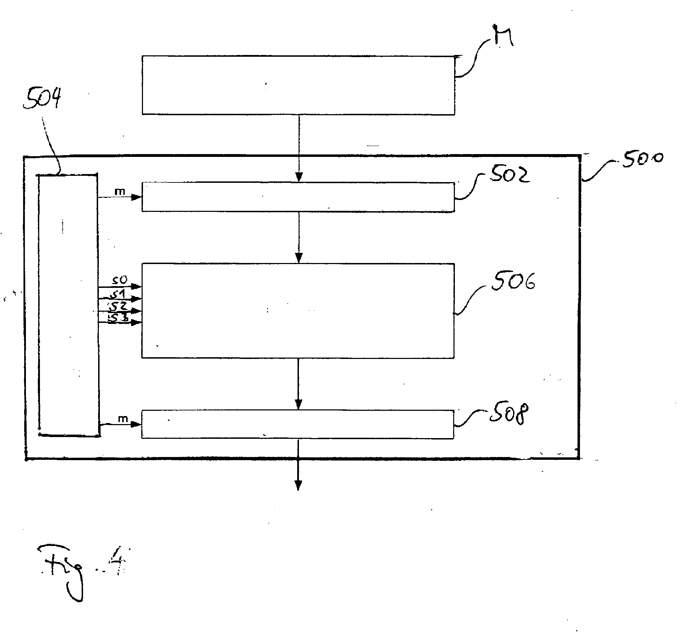

Der Verfahrensblock S400 umfasst einen, ersten Justierschritt S402, bei dem ein eingehendes Datenwort 450, dessen Länge 2m-1 kleiner als die hardwaremäßig unterstützte Länge 2n-1 ist, um eine Auffüllschrittweite sf nach links verschoben wird. Das so modifizierte Datenwort 450' enthält ein erstes Sub-Datenwort 452 und ein zweites Sub-Datenwort 454. Diese sind in Figur 4 wie gehabt auch mit C0 und C1 gekennzeichnet. Diese Bezeichnung umfasst auch die links- und rechtsseitig vorhandenen Blöcke 452.1 und 454.1, die mit Nullen gefüllt sind. Das zweite Datenwort 454 wird anschließend in drei parallel durchgeführten Rechtsschiebeschritten um die Schrittweiten S1, S2 und S3 nach rechts verschoben erfolgt in entsprechenden Schritten S412, S414 und S416. Anschließend werden die so gebildeten Summandenterme in einem Addierschritt S418 zum ersten Sub-Datenwort 452 addiert:

Zu beachten ist, dass im Verfahren der Fig. 2 die Summandenterme zu C addiert (300) wurden. In der Verfahrensführung der Fig. 2 werden sie nur noch zu C0 addiert (452). Dadurch entfällt (unter Rückgriff auf die verwendeten Bezugszeichen) im vorliegenden Ausführungsbeispiel die Operation (304)+(306), die stets in Null resultiert. In der vorliegenden Verfahrensführung werden daher insgesamt nur vier Terme zum ersten Sub-Datenwort hinzu addiert.

Nach der so erfolgten Teilreduktion wird das am Ausgang des Addierschritts 418 bereitstehende Summendatenwort 470 im nächsten Iterationsschritt S420 einer entsprechenden Schrittfolge S422 bis S428 unterzogen, wie im Zusammenhang mit Figur 2b) ausführlich wurde.

Das am Ausgang des Addierschritt S428 bereitstehende Summen-Datenwort 486 wird in einem anschließenden zweiten Justierschritt S432 um die Auffüllschrittweite sf nach rechts verschoben, wodurch ein entsprechend modifiziertes Summen-Datenwort 488 gebildet wird. Zu diesem werden anschließend in einem weiteren Addierschritt S434 die zweiten Sub-Datenwörter 454 und 474 addiert, wodurch am Ausgang des Addierschritts 434 das gesuchte reduzierte zweite Datenwort 490 vorliegt.

Der Vorteil dieser Verfahrensführung liegt darin, dass in jedem Iterationsschritt ein Rechtsschiebeschritt eingespart wird. Dies bedeutet, dass in einer entsprechenden Hardwareimplementierung ein Rechtsschieber weniger benötigt wird, was einerseits zu einer zusätzlichen Verfahrensbeschleunigung und andererseits zu einer Flächenersparnis führt.

Fig. 4 zeigt ein Blockdiagramm eines Reduzierers, der zur Implementierung der Verfahrensführung entsprechend den Figuren 2a) und 2b) ausgebildet ist. Der Reduzierer 500 ist einem Multiplizierer M nachgeschaltet, an dessen Ausgang Datenworte mit der Länge 2m-1 anliegen. Ein solches Datenwort, dass das Produkt einer im Multiplizierer M durchgeführten Multiplikation bildet, wird einer ersten Justiereinheit 502 zugeführt, die eine Linksverschiebung entsprechend dem Schritt S402 aus Figur 3 ausführt. Hierbei wird die erste Justiereinheit 502 von einer Steuereinheit 504 angesteuert, die den Parameter m, also die Feldgrößer der Datenworte vorgibt. Anhand dieses Parameters ermittelt die erste Justiereinheit eine Auffüllschrittweite, wie zuvor beschrieben. Die Justiereinheit füllt nach einer mit der Auffüllschrittweite durchgeführten Linksverschiebung des eingangs anliegenden ersten Datenwortes am linken und rechten Rand mit Nullen auf, so dass am Ausgang der ersten Justiereinheit 502 ein Datenwort der vom Reduzierer 500 unterstützten Wortlänge 2n-1 vorliegt. In dem so modifizierten ersten Datenwort liegen diejenigen Terme des dem ursprünglichen ersten Datenwort entsprechendem Polynoms C(x), die eine Ordnung größer als m haben an denselben Bitpositionen, wie wenn schon das ursprüngliche Datenwort die Länge 2n-1 gehabt hätte.

Der ersten Justiereinheit 502 ist eine Reduziereinheit 506 nachgeschaltet, deren Betrieb ebenfalls von der Steuereinheit 504 kontrolliert wird. Diese liefert der Reduziereinheit insbesondere die für die anhand der Figuren 2a) und 2b) und Figur 3 ausführlich beschriebenen Rechtsverschiebungen erforderlichen Parameter S0 bis S3. Die nähere Struktur der Reduziereinheit wird anhand der nachfolgenden Figuren 6 und 7 in alternativen Ausführungsbeispielen beschrieben.

Der Reduziereinheit 506 ist eine zweite Justiereinheit 508 nachgeschaltet. Diese sorgt für eine Rücktransformation des am Ausgang des Reduzierers anliegenden Summen-Datenwortes durch eine Rechtsverschiebung und Entfernung der eingangs in der ersten Justiereinheit eingefügten Nullen. Am Ausgang der zweiten Justiereinheit 508 liegt dann das gesuchte reduzierte zweite Datenwort an.

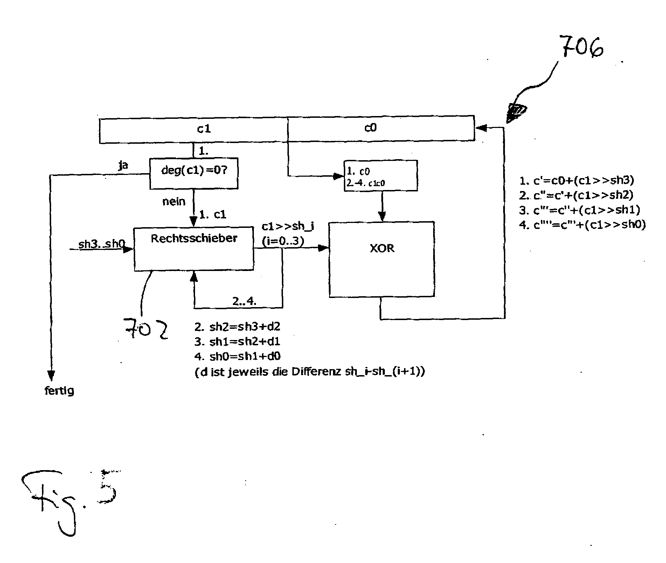

Figur 5 zeigt eine alternative Implementierung der Reduziereinheit, bei der mit lediglich einem Rechtsschieber 702 gearbeitet wird, der seriell unterschiedlich weit verschobene Kopien des zweiten Sub-Datenwortes erzeugt, die zum jeweiligen ersten Sub-Datenwort hinzu addiert werden.

Die Reduziereinheit 706 der Figur 5 benötigt dementsprechend viele Zyklen für einen Reduzierschritt, wobei vorausgesetzt wird, dass die Rechtsverschiebungen in der Ordnung $S3 \leq S2 \leq S1 \leq 50$ durchgeführt werden, so dass sukzessive nach rechts geschoben wird.

## Patentansprüche

1. Verfahren zur Verwendung in einem Kryptographieverfahren in einer elektronischen Vorrichtung zur Reduktion eines einem Polynom C(x) entsprechenden ersten Datenworts mit einer Länge von maximal 2n-1 auf ein zweites Datenwort mit einer Länge von maximal m, das in einem binären finiten Feld $GF(2^m)$, dessen Elemente eine maximale Länge m haben, einem zu C(x) äquivalenten Polynom C"0(x) entspricht, wobei m entweder kleiner oder gleich n ist, mit den Schritten:

   - Bereitstellen eines Reduktionspolynoms R(x), das ein Trinomial oder ein Pentanomial bildet;
   - Partitionieren des ersten Datenworts in ein binäres erstes Sub-Datenwort C0 und ein binäres zweites Sub-Datenwort C1, deren entsprechende Polynome C0(x) und C1(x) die Gleichung $C(x) = C1(x) * x^m + C0(x)$ erfüllen, und Abgreifen des zweiten Sub-Datenwortes zur Bildung eines ersten Summandenterms;
   - Rechtsverschieben des zweiten Sub-Datenworts zur Bildung eines zweiten Summandenterms, und Wiederholung des Rechtsverschiebungsschrittes zur Bildung weiterer Summandenterme, bis jedem nicht verschwindenden Term des Reduktionspolynoms, der nicht der Term $x^m$ ist, je ein Summandenterm zugeordnet ist, indem die Schrittweite einer jeweiligen Rechtsverschiebung gleich der Differenz von m und der Ordnung eines jeweiligen nicht verschwindenden Terms des Reduktionspolynoms ist;
   - Addieren der gebildeten Summandenterme zum ersten Datenwort zur Bildung eines Summendatenwortes;
   - wenn das so ermittelte Summendatenwort eine Länge größer als m hat, Anwendung der Verfahrensschritte ab dem Schritt des Partitionierens auf das gebildete Summandendatenwort, bis das so ermittelte Summendatenwort eine Länge von maximal m hat und somit das zweite Datenwort bildet.

2. Verfahren zur Verwendung in einem Kryptographieverfahren in einer elektronischen Vorrichtung zur Reduktion eines einem Polynom C(x) entsprechenden ersten Datenworts mit einer Länge von maximal 2n-1 auf ein zweites Datenwort mit einer Länge von maximal m, das in einem binären finiten Feld $GF(2^m)$, dessen Elemente eine maximale Länge m haben, einem zu C(x) äquivalenten Polynom C"0(x) entspricht, wobei m entweder kleiner oder gleich n ist, mit den Schritten:

   - Bereitstellen eines Reduktionspolynoms R(x), das ein Trinomial oder ein Pentanomial bildet;
   - Partitionieren des ersten Datenworts in ein binäres erstes Sub-Datenwort C0 und ein binäres zweites Sub-Datenwort C1, deren entsprechende Polynome C0(x) und C1(x) die Gleichung $C(x) = C1(x) * x^m + C0(x)$ erfüllen, und Abgreifen des zweiten Sub-Datenwortes zur Bildung eines ersten Summandenterms;
   - Rechtsverschieben des zweiten Sub-Datenworts zur Bildung eines zweiten Summandenterms, und Wiederholung des Rechtsverschiebungsschrittes zur Bildung weiterer Summandenterme, bis jedem nicht verschwindenden Term des Reduktionspolynoms, der nicht der Term $x^m$ ist, je ein Summandenterm zugeordnet ist, indem die Schrittweite einer jeweiligen Rechtsverschiebung gleich der Differenz von m und der Ordnung eines jeweiligen nicht verschwindenden Terms des Reduktionspolynoms ist;
   - Addieren der gebildeten Summandenterme, mit Ausnahme des letzten Summandenterms, der dem Term $x°$ zugeordnet ist, zum ersten Datenwort;
   - wenn das so ermittelte Summendatenwort eine Länge größer als m hat, Anwendung der Verfahrensschritte ab dem Schritt des Partitionierens auf das gebildete Summandendatenwort, bis das so ermittelte Summendatenwort eine Länge von maximal m hat;
- Addieren des letzten Summandenterms und, im genannten Falle einer Anwendung der Verfahrensschritte ab dem Schritt des Partitionierens auf das gebildete Summandendatenwort, jedes weiteren zwischenzeitlich ermittelten letzten Summandenterms zum zuletzt ermittelten Summendatenwort zur Bildung des zweiten Datenworts.

3.  Verfahren nach Anspruch 1 oder 2, bei dem das erste Datenwort eine Länge von weniger als 2n-1 hat, mit einem vor der Rechtsschiebeoperation durchgeführten zusätzlichen ersten Justierschritt, der ein Linksverschieben des ersten Datenworts um eine Auffüllschrittweite und ein beiderseitiges Anfügen einer der Auffüllschrittweite entsprechenden Anzahl Nullen an das erste Datenwort beinhaltet, derart, dass die Länge des so modifizierten ersten Datenworts 2n-1 beträgt und dass im modifizierten ersten Datenwort diejenigen Terme des dem ersten Datenwort entsprechenden Polynoms C(x), die eine Ordnung größer als m haben, an denselben Bitpositionen angeordnet sind wie wenn das erste Datenwort schon anfänglich die Länge 2n-1 gehabt hätte.

4.  Verfahren nach Anspruch 3, mit einem zweiten Justierschritt, der ein Entfernen der anfänglich angefügten Nullen aus dem ermittelten Summendatenwort und ein Rechtsverschieben des Summendatenworts um die Auffüllschrittweite beinhaltet.

5.  Verfahren nach einem der Ansprüche 1 bis 4, bei dem das irreduzible Polynom allein durch die Potenzen der nicht verschwindenden Terme des Reduktionspolynoms, die nicht der Term $x^m$ sind, repräsentiert wird.

6.  Verfahren nach Anspruch 5, bei dem das irreduzible Polynom zusätzlich durch die bekannte maximale Länge m von Datenworten des binären finiten Feldes repräsentiert wird.

7.  Asymmetrisches Kryptographieverfahren zur Verwendung in einer elektronischen Kryptographievorrichtung, umfassend

    - Reduzieren eines einem Polynom C(x) entsprechenden ersten Datenworts mit einer Länge von maximal 2n-1 auf ein zweites Datenwort mit einer Länge von maximal m, das in einem binären finiten Feld $GF(2^m)$, dessen Elemente eine maximale Länge m haben, einem zu C(x) äquivalenten Polynom C''0(x) entspricht, wobei m entweder kleiner oder gleich n ist, gemäß einem Verfahren eines der Ansprüche 1 bis 6.

8.  Asymmetrisches Kryptographieverfahren nach Anspruch 7, das ein Verfahren der elliptischen Kurvenkryptographie bildet, umfassend vor dem Reduzieren:

    - Multiplizieren zweier, Faktor-Polynomen A(x) und B(x) entsprechenden Faktor-Datenworte zu dem einem Polynom C(x) entsprechenden ersten Datenwort mit einer Länge von maximal 2n-1.

9.  Verfahren zur Berechung einer digitalen Signatur, umfassend ein asymmetrisches Kryptographieverfahren nach Anspruch 8.

10. Vorrichtung zur Reduktion eines einem Polynom C(x) entsprechenden ersten Datenworts mit einer Länge von maximal 2n-1 auf ein zweites Datenwort mit einer Länge von maximal m, das in einem binären finiten Feld $GF(2^m)$, dessen Elemente eine maximale Länge m haben, einem zu C(x) äquivalenten Polynom C''0(x) entspricht, wobei m entweder kleiner oder gleich n ist, mit:

    - einem Speicher, der eine Repräsentation mindestens eines Reduktionspolynoms R(x) enthält, das ein Trinomial oder ein Pentanomial bildet;
    - einer Selektionseinheit, die ausgebildet ist, ein binäres Sub-Datenwort aus dem ersten Datenwort zu abzugreifen, dessen entsprechendes Polynom C1(x) die Gleichung C(x) = C1(x) * $x^m$ + C0(x) erfüllt und das einen ersten Summandenterm bildet;
    - einer Schiebeeinheit, die mit der Selektionseinheit verbunden und ausgebildet ist, das Sub-Datenwort zur Bildung eines zweiten oder weiterer Summandenterme um eine jeweils vorbestimmte Schrittweite nach rechts zu verschieben und die gebildeten Summandenterme auszugeben;
    - einer Addiereinheit, die mit der Schiebeeinheit verbunden und ausgebildet ist, einen jeweiligen ersten Summandenterm sowie die von der Schiebeeinheit ausgegebenen Summandenterme zum ersten Datenwort zu addieren; und

- einer Steuereinheit, die ausgebildet ist,

die Schrittweite einer jeweiligen, von der Schiebeeinheit auszuführenden Rechtsverschiebung zur Bildung eines Summandenterms als Differenz von m und der Ordnung eines jeweiligen nicht verschwindenden Terms des Reduktionspolynoms zu bestimmen,

die Schiebeeinheit zur wiederholten Durchführung des Rechtsverschiebungsschritts für eine Bildung weiterer Summandenterme mit jeweils neu bestimmter Schrittweite zu instruieren, bis jedem nicht verschwindenden Term eines jeweils vorgegebenen Reduktionspolynoms, der nicht der Term $x^m$ ist, je ein Summandenterm zugeordnet ist,

die Addiereinheit zur Addition der jeweiligen Summandenterme zum ersten Datenwort zu instruieren, um ein Summendatenwort zu ermitteln,

und die Berechnungseinheit, die Schiebeeinheit und die Addiereinheit erforderlichenfalls erneut zu aktivieren, bis das ermittelte Summendatenwort eine Länge von maximal m hat und somit das zweite Datenwort bildet.

**11.** Vorrichtung nach Anspruch 10, bei der die Steuereinheit ausgebildet ist, die Addiereinheit im Falle einer Wiederholung der Verfahrensschritte ab dem Schritt des Ermittelns eines binären Sub-Datenworts, zu instruieren, die jeweils gebildeten Summandenterme mit Ausnahme des ersten Summandenterms zum jeweiligen ersten Datenwort zu addieren,

und nach einer Feststellung, dass ein ermitteltes Summendatenwort eine Länge hat, die nicht größer als m ist, zur Bildung des zweiten Datenworts jeden zwischenzeitlich ermittelten ersten Summandenterm zum ermittelten Summendatenwort zu addieren.

**12.** Vorrichtung nach Anspruch 10 oder 11, mit einer ersten und einer zweiten Justiereinheit,

wobei die erste Justiereinheit ausgebildet ist, ein eingehendes erstes Datenwort mit einer Länge von weniger als 2n-1 vor der Rechtsschiebeoperation um eine Auffüllschrittweite nach links zu verschieben und beiderseits des ersten Datenwortes eine der Auffüllschrittweite entsprechende Anzahl Nullen an das erste Datenwort anzufügen, derart, dass die Länge des so modifizierten ersten Datenworts 2n-1 beträgt und dass im modifizierten ersten Datenwort diejenigen Terme des dem ersten Datenwort entsprechenden Polynoms C(x), die eine Ordnung größer als m haben, an denselben Bitpositionen angeordnet sind wie wenn das erste Datenwort schon anfänglich die Länge 2n-1 gehabt hätte, und

wobei die zweite Justiereinheit ausgebildet ist, das ermittelte Summendatenwort der Länge von maximal m um die Auffüllschrittweite nach rechts zu verschieben und die anfänglich angefügten Nullen zu entfernen.

**13.** Vorrichtung nach einem der Ansprüche 10 bis 12, bei der die Schiebeeinheit eine Anzahl parallel geschalteter Rechtsschieber enthält, denen das Sub-Datenwort zugeführt ist.

**14.** Vorrichtung nach einem der Ansprüche 10 bis 12, bei der die Schiebeeinheit genau einen Rechtsschieber enthält, und bei der die Steuereinheit ausgebildet ist, die Wiederholung des Rechtsverschiebungsschrittes zur Bildung weiterer Summandenterme durch zusätzliches Rechtsschieben des zuletzt vom Rechtsschieber ausgegebenen Summandenterms um eine jeweilige Differenzschrittweite durchzuführen, wobei die jeweilige Differenzschrittweite die Differenz zwischen den Rechtsverschiebungen aufeinander folgender Summandenterme jeweils gegenüber dem ersten Summandenterm ist.

**15.** Elektronische Kryptographievorrichtung, enthaltend eine Reduktionsvorrichtung nach einem der Ansprüche 10 bis 14.

**16.** Elektronische Kryptographievorrichtung nach Anspruch 15, die zur Verschlüsselung oder Entschlüsselung von Daten nach einem Verfahren der elliptischen Kurvenkryptographie ausgebildet ist.

**17.** Elektronische Kryptographievorrichtung nach Anspruch 16, mit einer Multipliziervorrichtung, die ausgebildet ist zum Multiplizieren zweier, Faktor-Polynomen A(x) und B(x) entsprechenden Faktor-Datenworte zu einem dem Polynom C(x) entsprechenden ersten Datenwort mit einer Länge von maximal 2n-1.

**Claims**

**1.** Method for use in a cryptography process in an electronic apparatus for reducing a first data word corresponding to a polynomial C(x) with a length of not more than 2n-1 to a second data word with a length of not more than m, which corresponds to a polynomial C''0(x) equivalent to C(x) in a binary finite field $GF(2^m)$, the elements of which have a maximum length m, where m is either less than or equal to n, comprising the steps of:

- providing a reduction polynomial R(x) which forms a trinomial or a pentanomial;
- partitioning the first data word into a binary first sub-data word C0 and a binary second sub-data word C1, the corresponding polynomials C0(x) and C1(x) of which satisfy the equation $C(x) = C1(x) * x^m + C0(x)$, and taking the second sub-data word to form a first addend term;
- right-shifting the second sub-data word to form a second addend term, and repeating the right-shift step to form further addend terms, until an addend term has been allocated to each non-vanishing term of the reduction polynomial which is not the term $x^m$, where the increment of a respective right-shift is equal to the difference of m and the order of a respective non-vanishing term of the reduction polynomial;
- adding the addend terms formed to the first data word to form a total data word;
- if the total data word thus determined has a length greater than m, applying the process steps from the partitioning step onwards to the total data word formed until the total data word thus determined has a length of not more than m and thus forms the second data word.

2. Method for use in a cryptography process in an electronic apparatus for reducing a first data word corresponding to a polynomial C(x) with a length of not more than 2n-1 to a second data word with a length of not more than m, which corresponds to a polynomial C"0(x) equivalent to C(x) in a binary finite field $GF(2^m)$, the elements of which have a maximum length m, where m is either less than or equal to n, comprising the steps of:

- providing a reduction polynomial R(x) which forms a trinomial or a pentanomial;
- partitioning the first data word into a binary first sub-data word C0 and a binary second sub-data word C1, the corresponding polynomials C0(x) and C1(x) of which satisfy the equation $C(x) = C1(x) * x^m + C0(x)$, and taking the second sub-data word to form a first addend term;
- right-shifting the second sub-data word to form a second addend term, and repeating the right-shifting step to form further addend terms, until an addend term has been allocated to each non-vanishing term of the reduction polynomial which is not the term $x^m$, where the increment of a respective right-shift is equal to the difference of m and the order of a respective non-vanishing term of the reduction polynomial;
- adding the addend terms formed, with the exception of the last addend term that is allocated to the term x°, to the first data word;
- if the total data word thus determined has a length greater than m, applying the process steps from the partitioning step onwards to the addend data word formed until the addend data word thus determined has a length of not more than m;
- adding the last addend term and, in the specified event of process steps from the partitioning step onwards being applied to the addend data word formed, every further final addend term determined in the mean time to the total data word determined last in order to form the second data word.

3. Method according to claim 1 or 2, wherein the first data word has a length of less than 2n-1, with an additional first adjusting step carried out before the right-shift operation, that comprises a left-shifting of the first data word by a filling increment and the addition of a number of zeros corresponding to the filling increment to both ends of the first data word, such that the length of the first data word thus modified is 2n-1 and that in the modified first data word the terms of the polynomial C(x) corresponding to the first data word which have an order greater than m are arranged at the same bit positions as if the first data word already initially had the length 2n-1.

4. Method according to claim 3, with a second adjusting step which comprises removing the zeros added initially from the total data word determined and right-shifting the total data word by the filling increment.

5. Method according to one of claims 1 to 4, wherein the irreducible polynomial on its own is represented by the powers of the non-vanishing terms of the reduction polynomial which are not the term $x^m$.

6. Method according to claim 5, wherein the irreducible polynomial is additionally represented by the known maximum length m of data words of the binary finite field.

7. Asymmetric cryptography process for use in an electronic cryptography apparatus, comprising

- reducing a first data word with a length of not more than 2n-1, corresponding to a polynomial C(x), to a second data word with a length of not more than m, which corresponds to a polynomial C"0(x) equivalent to C(x) in a binary finite field $GF(2^m)$, the elements of which have a maximum length m, where m is either less than or equal to n, according to a method as in one of claims 1 to 6.

8. Asymmetric cryptography process according to claim 7, which forms a method of elliptical curve cryptography, comprising, before the reduction:

    - multiplying two factor data words corresponding to factor polynomials A(x) and B(x) to form the first data word corresponding to a polynomial C(x) with a length of not more than 2n-1.

9. Method of calculating a digital signature, comprising an asymmetric cryptography process according to claim 8.

10. Apparatus for reducing a first data word with a length of not more than 2n-1, corresponding to a polynomial C(x), to a second data word with a length of not more than m, which corresponds to a polynomial C"0(x) equivalent to C(x) in a binary finite field $GF(2^m)$, the elements of which have a maximum length m, where m is either less than or equal to n, with:

    - a memory that contains a representation of at least one reduction polynomial R(x) that forms a trinomial or a pentanomial;
    - a selection unit that is designed to take a binary sub-data word from the first data word, the corresponding polynomial C1(x) of which satisfies the equation $C(x) = C1(x) * x^m + C0(x)$, and which forms the first addend term;
    - a shifting unit that is connected to the selection unit and is designed to shift the sub-data word to the right by a predetermined increment in order to form a second or further addend terms and to issue the addend terms formed;
    - an adding unit that is connected to the shifting unit and is designed to add a first addend term and the addend terms issued by the shifting unit to the first data word; and
    - a control unit that is designed to

    determine the increment of a particular right-shift that is to be carried out by the shifting unit to form an addend term as the difference of m and the order of a particular non-vanishing term of the reduction polynomial,
    instruct the shifting unit to repeat the right-shifting step to form further addend terms with a newly determined increment in each case until an addend term has been allocated to each non-vanishing terms of a predetermined reduction polynomial which is not the term $x^m$,
    instruct the adding unit to add the respective addend terms to the first data word in order to obtain a total data word, and to re-activate the calculating unit, the shifting unit and the adding unit, if necessary, until the total data word determined has a length of not more than m and thus forms the second data word.

11. Apparatus according to claim 10, wherein the control unit is designed to instruct the adding unit, in the case of repetition of the process steps from the step of determining a binary sub-data word onwards, to add the addend terms formed, with the exception of the first addend term, to the respective first data word,
    and after it has been established that a total data word determined has a length of not more than m, to add each first addend term ascertained in the mean time to the total data word obtained, in order to form the second data word.

12. Apparatus according to claim 10 or 11, with a first and a second adjusting unit,
    wherein the first adjusting unit is designed to shift an input first data word with a length of less than 2n-1 to the left by one filling increment before the right-shift operation and to add a number of zeros corresponding to the filling increment to both sides of the first data word such that the length of the first data word thus modified is 2n-1 and in the modified first data word the terms of the polynomial C(x) corresponding to the first data word which have an order greater than m are arranged at the same bit positions as if the first data word had already had the length 2n-1 at the beginning, and
    wherein the second adjusting unit is designed to shift the total data word obtained with a length of not more than m to the right by the filling increment and to eliminate the zeros added initially.

13. Apparatus according to one of claims 10 to 12, wherein the shifting unit contains a number of parallel switched right-shifting device to which the sub-data word is supplied.

14. Apparatus according to one of claims 10 to 12, wherein the shifting unit contains precisely one right-shifting device, and wherein the control unit is designed to carry out the repetition of the right shifting step to form further addend terms by additional right-shifting of the addend term last issued by the right-shifting device by a differential increment in each case, the differential increment in each case being the difference between the right shifts of successive addend terms compared with the first addend term.

**15.** Electronic cryptography apparatus, containing a reducing apparatus according to one of claims 10 to 14.

**16.** Electronic cryptography apparatus according to claim 15, which is designed to encode or decode data using a process of elliptical curve cryptography.

**17.** Electronic cryptography apparatus according to claim 16, with a multiplying apparatus that is designed to multiply two factor data words corresponding to factor polynomials A(x) and B(x) to obtain a first data word with a length of not more than 2n-1 corresponding to the polynomial C(x).

**Revendications**

**1.** Procédé destiné à être utilisé dans un procédé de cryptographie dans un dispositif électronique pour réduire un premier mot de données correspondant à un polynôme C(x) et présentant une longueur de 2n-1 au maximum en un deuxième mot de données présentant une longueur maximale de m, lequel deuxième mot de données correspond à un polynôme C"0(x) équivalent à C(x) dans un champ fini binaire GF($2^m$) dont les éléments ont une longueur maximale de m, m étant inférieur ou égal à n, comprenant les étapes consistant à :

- fournir un polynôme de réduction R(x), qui forme un trinôme ou un pentanôme ;
- partitionner le premier mot de données en un premier sous-mot de données binaire C0 et un deuxième sous-mot de données binaire C1, dont les polynômes correspondants C0(x) et C1(x) satisfont l'équation C(x) = C1(x) * $x^m$ + C0(x), et prélever le deuxième sous-mot de données afin de constituer un premier terme de somme ;
- effectuer un décalage à droite du deuxième sous-mot de données pour former un deuxième terme de somme, et répéter l'étape de décalage à droite pour la formation de termes supplémentaires de somme, jusqu'à ce que chaque terme qui ne disparaît pas du polynôme de réduction, qui ne soit pas le terme $x^m$, se trouve affecté à un terme de somme, dans lequel le pas de progression de chaque décalage à droite respectif est égal à la différence entre m et l'ordre d'un terme respectif qui ne disparaît pas du polynôme de réduction ;
- additionner les termes de la somme ainsi formés au premier mot de données afin de constituer un mot de données de somme ;
- lorsque le mot de données de somme ainsi obtenu présente une longueur qui est supérieure à m, mettre en oeuvre des étapes de procédé à partir de l'étape consistant à partitionner, sur le mot de données de somme formé, jusqu'à ce que le mot de données de somme ainsi obtenu présente une longueur maximale de m et forme ainsi le deuxième mot de données.

**2.** Procédé destiné à être utilisé dans un procédé de cryptographie dans un dispositif électronique pour réduire un premier mot de données correspondant à un polynôme C(x) et présentant une longueur de 2n-1 au maximum en un deuxième mot de données présentant une longueur maximale de m, lequel deuxième mot de données correspond à un polynôme C"0(x) équivalent à C(x) dans un champ fini binaire GF($2^m$) dont les éléments ont une longueur maximale de m, m étant inférieur ou égal à n, comprenant les étapes consistant à :

- fournir un polynôme de réduction R(x), qui forme un trinôme ou un pentanôme ;
- partitionner le premier mot de données en un premier sous-mot de données binaire C0 et un deuxième sous-mot de données binaire C1, dont les polynômes correspondants C0(x) et C1(x) satisfont l'équation C(x) = C1(x) * $x^m$ + C0(x), et prélever le deuxième sous-mot de données afin de constituer le premier terme de somme ;
- effectuer un décalage à droite du deuxième sous-mot de données pour former un deuxième terme de somme, et répéter l'étape de décalage à droite pour la formation de termes supplémentaires de somme, jusqu'à ce que chaque terme qui ne disparaît pas du polynôme de réduction, qui ne soit pas le terme $x^m$, se trouve affecté à un terme de somme, dans lequel le pas de progression de chaque décalage à droite respectif est égal à la différence entre m et l'ordre d'un terme respectif qui ne disparaît pas du polynôme de réduction ;
- additionner les termes de somme ainsi formés, à l'exception du dernier terme de somme, qui est affecté au terme x°, au premier mot de données ;
- lorsque le mot de données de somme ainsi obtenu présente une longueur qui est supérieure à m, mettre en oeuvre des étapes de procédé à partir de l'étape consistant à partitionner, sur le mot de données de somme formé, jusqu'à ce que le mot de données de somme ainsi obtenu présente une longueur maximale de m ;
- additionner le dernier terme de somme et, dans le cas mentionné d'une mise en oeuvre des étapes de procédé à partir de l'étape consistant à partitionner, sur le mot de données de somme formé, chaque dernier terme de somme fourni entre-temps de façon supplémentaire, au mot de données de somme fourni en dernier afin de constituer le deuxième mot de données.

3. Procédé selon la revendication 1 ou 2, dans lequel le premier mot de données présente une longueur inférieure à $2n - 1$, avec la mise en oeuvre avant l'opération de décalage à droite d'une étape supplémentaire de justification, qui contient, un décalage à gauche du premier mot de données d'une largeur de pas de remplissage, et un ajout au premier mot de données, des deux côtés, d'un nombre de zéros correspondant à la largeur de pas de remplissage, de sorte que la longueur du premier mot de données ainsi modifié soit égale à $2n-1$, et de sorte que, dans le premier mot de données modifié, les termes du polynôme $C(x)$ correspondant au premier mot de données, d'un ordre supérieur à $m$, soient agencés dans les mêmes positions de bit qu'ils auraient eues si le premier mot de données avait déjà dès l'origine une longueur de $2n-1$.

4. Procédé selon la revendication 3, avec une deuxième étape de justification, qui comprend l'enlèvement des zéros initialement ajoutés du mot de données de somme fourni et un décalage à droite du mot de données de somme de la largeur de pas de remplissage.

5. Procédé selon l'une des revendications 1 à 4, dans lequel le polynôme irréductible est représenté uniquement par les puissances des termes qui ne disparaissent pas du polynôme de réduction, qui ne sont pas le terme $x^m$.

6. Procédé selon la revendication 5, dans lequel le polynôme irréductible est également représenté par la longueur maximale $m$ connue des mots de données du champ binaire fini.

7. Procédé de cryptographie asymétrique pour utilisation dans un dispositif de cryptographie électronique, comprenant

 - la réduction d'un premier mot de données correspondant à un polynôme $C(x)$ et présentant une longueur maximale de $2n-1$ en un deuxième mot de données présentant une longueur maximale de $m$, lequel deuxième mot de données correspond à un polynôme $C''0(x)$ équivalent à $C(x)$ dans un champ fini binaire $GF(2^m)$ dont les éléments ont une longueur maximale de $m$, $m$ étant inférieur ou égal à $n$, selon un procédé de l'une des revendications 1 à 6.

8. Procédé de cryptographie asymétrique selon la revendication 7, qui constitue un procédé de la cryptographie par courbes elliptiques, comprenant, avant la réduction :

 - la double multiplication de mots de données factoriels correspondant aux polynômes factoriels $A(x)$ et $B(x)$ par un premier mot de données avec une longueur maximale de $2n-1$ correspondant au polynôme $C(x)$.

9. Procédé pour le calcul d'une signature numérique comprenant un procédé de cryptographie asymétrique selon la revendication 8.

10. Dispositif pour la réduction d'un premier mot de données correspondant à un polynôme $C(x)$ et présentant une longueur de $2n-1$ au maximum en un deuxième mot de données présentant une longueur maximale de $m$, lequel deuxième mot de données correspond à un polynôme $C''0(x)$ équivalent à $C(x)$ dans un champ fini binaire $GF(2^m)$ dont les éléments ont une longueur maximale de $m$, $m$ étant inférieur ou égal à $n$, comprenant :

 - une mémoire, contenant une représentation d'au moins un polynôme de réduction $R(x)$ qui forme un trinôme ou un pentanôme ;
 - une unité de sélection adaptée pour le prélèvement d'un sous-mot de données binaire à partir du premier mot de données, dont le polynôme correspondant $C1(x)$ satisfait l'équation $C(x) = C1(x) * x^m + C0(x)$ et qui constitue un premier terme de somme ;
 - une unité de décalage, qui est reliée à l'unité de sélection et est réalisée avec celle-ci, pour décaler le sous-mot de données, afin de former un deuxième ou un ultérieur terme de la somme, d'un pas respectif prédéterminé vers la droite, et pour fournir en sortie le terme de somme obtenu ;
 - une unité d'addition, qui est reliée à l'unité de décalage et est réalisée avec celle-ci, pour additionner un premier terme de somme respectif ainsi que les termes de somme fournis en sortie par l'unité de décalage, au premier mot de données ; et
 - une unité de commande adaptée pour,

déterminer le pas dans chaque cas de décalage à droite effectué par l'unité de décalage, afin de former un terme de somme, comme différence de m et l'ordre d'un terme respectif qui ne disparaît pas du polynôme de réduction, instruire l'unité de décalage pour la réalisation de façon répétitive de l'étape de décalage à droite pour la constitution de termes de somme supplémentaires avec, dans chaque cas, l'application d'une largeur de pas déterminée de nouveau, jusqu'à ce que chaque terme qui ne disparaît pas d'un polynôme de réduction déterminée à l'avance dans chaque cas, qui n'est pas le terme $x^m$ a été affecté à un terme de la somme,

activer l'unité d'addition pour l'addition du terme de somme respectif au premier mot de données, afin de fournir un mot de données de somme,

et activer l'unité de calcul de nouveau l'unité de décalage ainsi que l'unité d'addition si nécessaire, jusqu'à ce que le mot de données de somme fourni présente une longueur maximale de m, formant ainsi la deuxième mot de données.

11. Dispositif selon la revendication 10, dans lequel l'unité de commande est adaptée pour donner des instructions à l'unité d'addition, dans le cas d'une répétition des étapes du procédé à partir de l'étape de fourniture d'un sous-mot de données binaire, de réaliser l'addition des termes de somme fournis dans chaque cas à l'exception du premier terme de somme, au premier mot de données respectif,

et après avoir déterminé, qu'un mot de données de somme fourni présente une longueur qui n'est pas supérieure à m, pour additionner, afin de construire le deuxième mot de données, chaque premier terme de somme fourni entre-temps, au mot de données de somme fourni.

12. Dispositif selon la revendication 10 ou 11, muni d'une première et d'une deuxième unité de justification,

dans lequel la première unité de justification est adaptée pour effectuer un décalage à gauche d'un premier mot de données entrant qui présente une longueur inférieure à 2n-1 avant l'opération de décalage à droite d'une largeur de pas de remplissage et pour ajouter au premier mot de données des deux côtés du premier mot de données un nombre de zéros qui correspond à la largeur de pas de remplissage, de sorte que la longueur du premier mot de données ainsi modifié soit égale à 2n - 1, et que, dans le premier mot de données modifié, les termes du polynôme C(x) correspondant au premier mot de données qui présentent un ordre supérieur à m, soient agencés dans les mêmes positions de bit qu'ils auraient eues si ce premier mot de données avait déjà à l'origine une longueur de 2n -1, et dans lequel la deuxième unité de justification est adaptée pour décaler vers la droite le mot de données de somme fourni d'une longueur maximale de m de la largeur de pas de remplissage, et pour éliminer les zéros ajoutés à l'origine.

13. Dispositif selon l'une des revendications 10 à 12, dans lequel l'unité de décalage présente une pluralité de décaleurs à droite connectés en parallèle, auxquels est présenté le sous-mot de données.

14. Dispositif selon l'une des revendications 10 à 12, dans lequel l'unité de décalage comprend exactement un décaleur à droite, et dans lequel l'unité de commande est adaptée afin de réaliser la répétition des étapes de décalage à droite afin de construire des termes de somme supplémentaires grâce à des décalages à droite supplémentaires, égaux à une largeur de pas de différence, du terme de somme fourni en sortie en dernier par le décaleur à droite, dans chaque cas, dans lequel la largeur de pas de différence est dans chaque cas la différence entre les décalages à droite des termes de somme l'un suivant l'autre par rapport, dans chaque cas, au premier terme de somme.

15. Un dispositif de cryptographie électronique comprenant un dispositif de réduction selon l'une des revendications 10 à 14.

16. Dispositif de cryptographie électronique selon la revendication 15, qui est adapté afin de mettre en oeuvre le cryptage ou le décryptage de données selon un procédé de la cryptographie par courbes elliptiques.

17. Dispositif de cryptographie électronique selon la revendication 16, avec un dispositif de multiplication qui est adapté pour mettre en oeuvre la multiplication double de mots de données factoriels correspondant à deux polynômes factoriels A(x) et B(x) par un premier mot de données avec une longueur maximale de 2n-1 correspondant au polynôme C(x).

```
1   1   0 ¦ 1   1   1   :   1   0   1   1
1   1   1 ¦ 0   1   0
            1 ¦ 1   0   1
            1 ¦ 0   1   1
              ¦ 1   1   0
```

| C1 | C0 |
|---|---|
| C1 · R | |

| | C1' | C0' |
|---|---|---|
| | C1' · R | |

| | | C0'' |
|---|---|---|

*Fig. 1*      — STAND DER TECHNIK —

Fig. 2

Fig. 3

Fig. 4

706

| c1 | c0 |
|---|---|

**1.**

**ja**

deg(c1)=0?

1. c0
2.-4. c1:c0

1. $c'=c0+(c1>>sh3)$
2. $c''=c'+(c1>>sh2)$
3. $c'''=c''+(c1>>sh1)$
4. $c''''=c'''+(c1>>sh0)$

**nein**

1. c1

sh3..sh0

Rechtsschieber

c1>>sh_i
(i=0..3)

XOR

2..4.

702

2. sh2=sh3+d2
3. sh1=sh2+d1
4. sh0=sh1+d0
(d ist jeweils die Differenz sh_i-sh_(i+1))

**fertig**

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 200310208518 A1
- US 20030208518 A1
- US 20030182340 A1

### In der Beschreibung aufgeführte Nicht-Patentliteratur

- **Saqib, N. A. ; Rodriguez-Henriquez, F. ; Diaz-Perez, A.** A parallel architecture for fast computation of elliptic curve scalar multiplication over GF(2m). *18th International Parallel & Distributed Processing Symposium,* 26. April 2004

- **Eberle, H. ; Gura, N. ; Chang-Shantz, S.** A cryptograhpic processorfor arbitrary elliptic curves over GF(2m). *IEEE 14th International Conference on Application-specific Systems, Architectures and Processors,* 24. Juni 2003, 444-454